# EUROPÄISCHE PATENTSCHRIFT

(11) **EP 1 240 503 B1**
(45) Veröffentlichungstag und Bekanntmachung des Hinweises auf die Patenterteilung: **17.01.2018**
(21) Anmeldenummer: 00993641.0
(22) Anmeldetag: 08.12.2000
(51) Int. Cl.: G01N 21/84, G01N 21/77

(54) **TESTSTREIFEN-ANALYSESYSTEM, MEDIZINISCHER TESTSTREIFEN, UND VERFAHREN ZUR ANALYTISCHEN UNTERSUCHUNG EINER PROBE MIT HILFE EINES TESTSTREIFEN-ANALYSESYSTEMS**
TEST STRIP ANALYSIS SYSTEM, MEDICAL TEST STRIP, AND METHOD OF ANALYSING A SAMPLE BY THE HELP OF A TEST STRIP ANALYSIS SYSTEM
SYSTÈME D'ANALYSE POUR UNE BANDE DE TEST, BANDE DE TEST MÉDICAL, ET PROCÉDÉ D'ANALYSE D'UN ÉCHANTILLON À L'AIDE D'UN SYSTÈME D'ANALYSE POUR UNE BANDE DE TEST

(30) Priorität: 24.12.1999 EP 99125874
(43) Veröffentlichungstag der Anmeldung: 18.09.2002
(73) Patentinhaber: Roche Diabetes Care GmbH, 68305 Mannheim (DE)
(72) Erfinder: PETRICH, Wolfgang, 76669 Bad Schönborn (DE); SCHMID, Wilfried, 68165 Mannheim (DE); KOCHERSCHEIDT, Gerrit, 44379 Dortmund (DE); ASFOUR, Jean-Michel, 63065 Offenbach (DE)
(74) Vertreter: Pfeifer, Hans-Peter
(86) Internationale Anmeldenummer: PCT/DE2000/004394
(87) Internationale Veröffentlichungsnummer: WO 2001/048461

(56) Entgegenhaltungen:
- EP-A- 0 234 928
- EP-A- 0 312 293
- EP-A- 0 585 744
- EP-A2- 1 061 371
- DE-A- 19 828 343
- DE-U- 9 110 757
- US-E- R E33 064
- WOLFBEIS O S: "CAPILLARY WAVEGUIDE SENSORS" TRAC, TRENDS IN ANALYTICAL CHEMISTRY,GB,ANALYTICAL CHEMISTRY. CAMBRIDGE, Bd. 15, Nr. 6, 1. Juni 1996 (1996-06-01), Seiten 225-231, XP000599461 ISSN: 0165-9936

## Beschreibung

Die Erfindung betrifft ein Testelement-Analysesystem zur analytischen Untersuchung einer Probe, das aus Testelementen und einem Auswertegerät besteht.

Zur qualitativen und quantitativen Analyse von Bestandteilen einer flüssigen Probe, insbesondere einer Körperflüssigkeit von Menschen oder Tieren, werden in großem Umfang photometrische, trägergebundene Tests eingesetzt. Dabei werden Testelemente verwendet, die ein in der Regel aus mehreren Reagenzien bestehendes Reagenzsystem enthalten. Zur Durchführung einer Reaktion wird das Testelement mit der Probe in Kontakt gebracht. Die Reaktion von Probe und Reagenz führt zu einer für die Analyse charakteristischen, optisch meßbaren Veränderung des Testelementes.

Auf medizinischem Gebiet kommen als Probe vor allem Blut und Urin in Betracht. Nachfolgend wird ohne Beschränkung der Allgemeinheit beispielhaft auf die Blutanalyse Bezug genommen. Ein besonders wichtiges Anwendungsgebiet, für das die Erfindung in besonderem Maße geeignet ist, ist die Kontrolle des Blutzuckerspiegels von Diabetikern, vor allem die Blutzuckerselbstkontrolle ("home monitoring").

Das zur Messung der für die Analyse charakteristischen Veränderung des Testelements und damit zur Auswertung des Analyseergebnisses vorgesehene Auswertegerät ist in der Regel für einen ganz bestimmten Typ von Testelementen eines bestimmten Herstellers geeignet. Die Testelemente und das Auswertegerät bilden somit wechselseitig aufeinander abgestimmte Bestandteile und werden üblicherweise insgesamt als Analysesystem bezeichnet.

Die bei photometrischen Tests verwendeten Testelemente haben meist die Form der bekannten Teststreifen, bei denen mindestens ein Testfeld auf einer Flachseite einer üblicherweise länglichen Tragfolie aus Kunststoff befestigt ist. Das Testfeld besteht häufig aus mehreren übereinander angeordneten Schichten, die unterschiedliche Bestandteile des Reagenzsystems enthalten und/oder unterschiedliche Funktionen erfüllen. Die Probe wird auf die Oberseite des Testfeldes aufgegeben. Nach Ablauf der erforderlichen Reaktionszeit kann in einer Detektionszone des Testfelds eine für die Analyse charakteristische Farbänderung mit Hilfe des Auswertegerätes reflexionsphotometrisch vermessen werden. Die Detektionszone befindet sich häufig auf der Unterseite des Testfeldes, die der Tragfolie zugewandt ist, wobei die Tragfolie im Bereich des Testfeldes ein Loch aufweist, durch das die photometrische Messung erfolgt. Die photometrische Meßeinrichtung des Analysegerätes besteht im wesentlichen aus einem auf die Detektionszone gerichteten Lichtsender (beispielsweise Leuchtdiode) und einem ebenfalls auf die Detektionszone ausgerichteten Detektor. Ein solches Analysesystem ist beispielsweise in den US-Patenten 5,281,395 und 5,424,035 beschrieben.

Aus der nicht vorpublizierten älteren europäischen Patentanmeldung EP 1 061 371 A2 ist ein Teststreifen-Analysesystem bekannt, bei dem zur Kontrolle der vollständigen Flüssigkeitsaufnahme einer Testschicht zusätzlich zu dem Remissionssignal, welches als Grundlage für die Analyse dient, ein Transversalsignal bestimmt wird. Dieses Transversalsignal basiert auf Sekundärlicht, das aus der senkrecht zu der Flächenausdehnung einer Testfeld-Tragfolie an deren Umfang verlaufenden Schnittfläche austritt.

Photometrische Testelement-Analysesysteme ermöglichen zu günstigen Kosten Analysen mit hoher Genauigkeit, weil die Testelemente rationell und kostengünstig mit ausgezeichneter Qualität hergestellt werden können und weil die photometrische Meßtechnik eine sehr exakte Auswertung der Farbentwicklung in der Detektionszone erlaubt. Die Handhabung bei der Messung ist jedoch nicht optimal. Insbesondere besteht ein hohes Risiko der Kontamination des Meßgerätes. Dies ist darauf zurückzuführen, daß sich das Testfeld aufgrund der für die photometrischen Messung erforderlichen Meßanordnung direkt über der Beleuchtungs- und Meßoptik befindet. Es ist deswegen erforderlich, daß die Probe, beispielsweise ein Blutstropfen, sehr exakt auf das Testfeld aufgebracht wird. Dies ist jedoch nicht immer möglich, zumal Diabetiker eine besonders wichtige Gruppe von Benutzern von Testelement-Analysesystemen sind und gerade diese Patienten häufig aufgrund von vorgeschrittenem Alter und eingeschränktem Sehvermögen große Schwierigkeiten haben, einen durch einen Stich in ihren Finger erzeugten Blutstropfen präzise und ohne Verschmutzung der Umgebung auf das Testfeld aufzubringen. Derartige Kontaminationen können zu einer Verschmutzung der Meßoptik führen, durch die die Genauigkeit nachfolgender Messungen drastisch beeinträchtigt wird. Außerdem ist die Reinigung verschmutzter Geräteteile unangenehm. In manchen Anwendungsfällen kann aus solchen Verunreinigungen auch eine Infektionsgefahr resultieren.

Der Erfindung liegt auf dieser Basis die Aufgabe zugrunde, ein photometrisches Teststreifen-Analysesystem zur Verfügung zu stellen, mit dem eine sehr gute Meßgenauigkeit und zugleich einfache Handhabung erreicht wird.

Die Aufgabe wird gelöst durch ein Teststreifen-Analysesystem gemäß Anspruch 1.

Gegenstand der Erfindung ist auch ein für ein solches Teststreifen-Analysesystem geeigneter medizinischer Teststreifen und ein Verfahren zur Durchführung von Analysen mit Hilfe des erfindungsgemäßen Analysesystems.

Die Lichtleitschicht besteht aus einem Material, das im Wellenlängenbereich des Primärlichts möglichst transparent ist, also eine möglichst geringe optische Absorption hat. Vorzugsweise ist sein Brechungsindex n₂ größer als der Brechungsindex n₁ der Umgebung (z.B. Luft oder eine entsprechende Beschichtung), so daß in der Lichtleitschicht Totalreflexion stattfindet. Der Lichtleitungsmechanismus in der Lichtleitschicht kann aber auch auf metallischer Reflexion der die Lichtleitschicht begrenzenden Grenzflächen basieren.

Die Eingangsfläche, durch die das Licht in die Lichtleitschicht eingekoppelt wird, wird vorzugsweise von einer Schnittfläche an einer Randseite der Lichtleitschicht gebildet. Im bevorzugten Fall eines Teststreifens mit einer langgestreckten, streifenförmigen Tragfolie erfolgt die Einkopplung bevorzugt durch eine Stirnfläche an einem Ende der Lichtleitschicht. Von der Eingangsfläche wird das Primärlicht, bevorzugt unter Totalreflexions-Bedingungen, zu dem Auskopplungsbereich geleitet, der ein Teil von einer der beiden Flachseiten der Tragfolie ist.

Um in dem Auskopplungsbereich die gewünschte Auskopplung des Lichts aus der Lichtleitschicht in die Detektionszone des Testfelds zu bewirken, können verschiedene Mittel eingesetzt werden, die weiter unten noch näher erläutert werden. Insbesondere kann durch geeignete Maßnahmen erreicht werden, daß in dem Auskopplungsbereich der Brechungsindex in der Umgebung der Lichtleitschicht nicht oder nur geringfügig niedriger als der Brechungsindex der Lichtleitschicht ist, so daß Totalreflexion nicht oder nur in geringem Umfang stattfindet. Die Auskopplung kann auch dadurch gefördert werden, daß die Oberfläche der Lichtleitschicht in dem Auskopplungsbereich aufgerauht ist. Schließlich kann die Auskopplung des Lichts durch eine geeignete Lichtführung innerhalb der Lichtleitschicht bewirkt werden, durch die erreicht wird, daß zumindest große Teile des Primärlichts in dem Auskopplungsbereich unter einem Winkel auf die dem Testfeld zugewandte Grenzfläche auftreffen, der größer als der Grenzwinkel α_{C} der Totalreflexion ist (sin α_{C} = n_{1/}n₂). Dies kann insbesondere dadurch erreicht werden, daß die dem Auskopplungsbereich gegenüberliegende Flachseite der Lichtleitschicht mindestens abschnittsweise so abgeschrägt ist, daß das Primärlicht in die Detektionszone gespiegelt wird.
Das aus der Detektionszone diffus reflektierte Sekundärlicht wird in die Lichtleitschicht reflektiert und darin - wiederum bevorzugt unter Totalreflexions-Bedingungen - mindestens einen Teil des Wegs zu dem Detektor transportiert. Grundsätzlich besteht die Möglichkeit, daß das Primärlicht und das Sekundärlicht in einer einschichtigen Tragfolie, also in der gleichen Lichtleitschicht transportiert werden. Bevorzugt ist jedoch eine Ausführungsform, bei der die Tragfolie zwei Lichtleitschichten aufweist, in denen das Primärlicht und das Sekundärlicht getrennt transportiert werden. Durch geeignete Maßnahmen, die nachfolgend noch näher erläutert werden, kann dabei erreicht werden, daß das von dem Detektor erfaßte Licht weitgehend frei von störenden Primärlichtanteilen ist. Dadurch wird ein sehr gutes Signal-/Untergrund-Verhältnis erreicht. Die Tragfolie besteht aus zwei Lichtleitschichten. Es besteht jedoch auch die Möglichkeit, daß die Tragfolie mehrschichtig unter Einbeziehung weiterer Schichten ausgebildet ist, die andere Aufgaben (beispielsweise hinsichtlich der mechanischen Eigenschaften der Tragfolie) erfüllen.

Dabei ist zu berücksichtigen, daß die Lichtleitschichten einen sehr kleinen Querschnitt haben. Die Tragfolie soll möglichst dünn sein, um Material, Gewicht und Verpackungsvolumen zu sparen. Daraus resultiert eine sehr geringe Dicke der in die Tragfolie integrierten Lichtleitschicht bzw. Lichtleitschichten. Vorzugsweise beträgt deren Gesamtdicke weniger als 3mm, besonders bevorzugt weniger als 1 mm. Ihre Breite (gemessen quer zur Lichttransportrichtung) beträgt vorzugsweise höchstens 10 mm, besonders bevorzugt höchstens 6 mm. Aufgrund der experimentellen Ergebnisse ist davon auszugehen, daß die Dicke der Lichtleitschichten mindestens etwa 10 *µ*m betragen sollte.

Die experimentelle Erprobung der Erfindung hat ergeben, daß trotz scheinbar ungünstiger Randbedingungen (kleine Eingangs- und Querschnittsfläche, geringe Primärlichtintensität in der Detektionszone) eine gute Meßgenauigkeit erreicht werden kann. Nach der Erkenntnis der Erfinder ist dies darauf zurückzuführen, daß im Vergleich zu konventionellen Messungen der diffusen Reflexion der Detektionszone von Testelementen ein erhöhter Anteil des detektierten Sekundärlichts als Nutzsignal erfaßt wird.

Zugleich ermöglicht die Erfindung eine wesentliche Vereinfachung der Handhabung, insbesondere hinsichtlich der kontaminationsfreien Aufbringung der Probe. Dies gilt insbesondere bei einer bevorzugten Ausführungsform, bei der sich in der Meßposition des Testelements das Testfeld mit der Blutaufgabestelle außerhalb des Auswertegerätes befindet. Damit wird sogenanntes "outside dosing" bei photometrischen Analysesystemen möglich. Bisher bestand diese Möglichkeit nur bei elektrochemischen Analysesystemen, die jedoch im Vergleich zu photometrischen Systemen eine geringere Genauigkeit erreichen bzw. einen höheren Kostenaufwand erfordern. Außerdem bieten sie im Gegensatz zu photometrischen Systemen nicht die Möglichkeit zur Überprüfung der Analyse durch visuelle Beobachtung der Farbentwicklung in der Detektionszone.

Die Erfindung wird im folgenden anhand eines in den Figuren dargestellten Ausführungsbeispiels näher erläutert. Die darin beschriebenen Merkmale können einzeln oder in Kombination verwendet werden, um bevorzugte Ausgestaltungen der Erfindung zu schaffen. Es zeigen:
- Fig. 1: eine perspektivische Prinzipdarstellung eines Analysesystems,
- Fig. 2: eine Seitenansicht, teilweise im Schnitt, eines Auswertegeräts mit einem in der Meßposition befindlichen Testelement,
- Fig. 3: eine Prinzipdarstellung in Seitenansicht zur Darstellung des Meßlichtwegs in einem erfindungsgemäß Analysesystem,
- Fig. 4: eine Detaildarstellung eines Ausschnitts aus Fig. 3,
- Fig. 5: eine Schnittdarstellung einer bevorzugten Ausführungsform einer Tragfolie.
- Fig. 6: Meßkurven der diffusen Reflexion der Detektionszone in Abhängigkeit von der Zeit für drei Glucosekonzentrationen,
- Fig. 7: eine graphische Darstellung einer Vergleichsmessung zwischen einem erfindungsgemäßen und einem konventionellen Analysesystem.

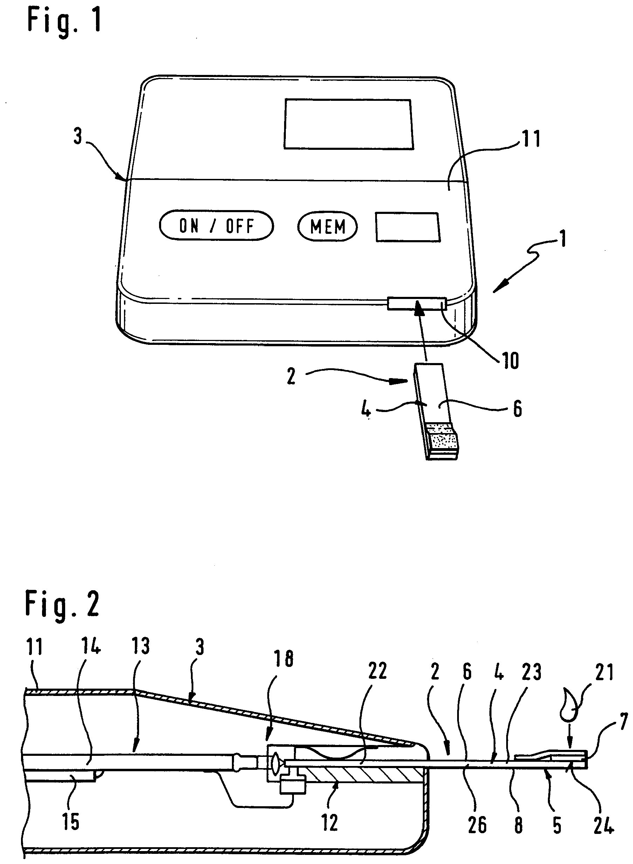

Das in den Figuren 1 und 2 dargestellte Analysesystem 1 besteht aus Testelementen 2 und einem Auswertegerät 3. Das Testelement 2 ist als Teststreifen 4 mit einer langgestreckten, aus Kunststoff hergestellten Tragfolie 5 und einem an der oberen Flachseite 6 der Tragfolie 5 befestigten Testfeld 7 ausgebildet.

Das Testelement 2 wird durch eine Öffnung 10 im Gehäuse 11 des Auswertegerätes 3 in eine Testelementhalterung 12 eingeschoben und dadurch in der in Figur 2 dargestellten Meßposition positioniert. Das Auswertegerät 3 enthält eine Meß- und Auswerteelektronik 13, die im dargestellten Fall mittels einer Leiterplatine 14 und integrierter Schaltkreise 15 realisiert ist. An die Meß- und Auswerteelektronik 13 angeschlossen ist ein vorzugsweise als Leuchtdiode (LED) realisierter Lichtsender 16 und ein vorzugsweise als Photodiode realisierter Detektor 17, die Bestandteile einer optischen Meßeinrichtung 18 sind.

Zur Durchführung einer Analyse wird ein Tropfen Probenflüssigkeit 21 auf die von der Tragfolie 5 abgewandte Seite (Oberseite) des Testfeldes 7 aufgebracht. Das Aufbringen der Probe wird dadurch erleichtert, daß sich nur ein erster Teilabschnitt 22 des in der Meßpösition positionierten Testelementes 2 innerhalb des Gehäuses 11 befindet, während ein zweiter Teilabschnitt 23 mit dem Testfeld 7 aus dem Gehäuse 11 herausragt und dadurch leicht zugänglich ist. Die Flüssigkeit dringt unter Auflösung der in dem Testfeld 7 enthaltenen Reagenzien ein, bis sie zu der Detektionszone 24 gelangt, die sich an der der Tragfolie 5 zugewandten Seite (Unterseite) des Testfeldes 7 befindet.

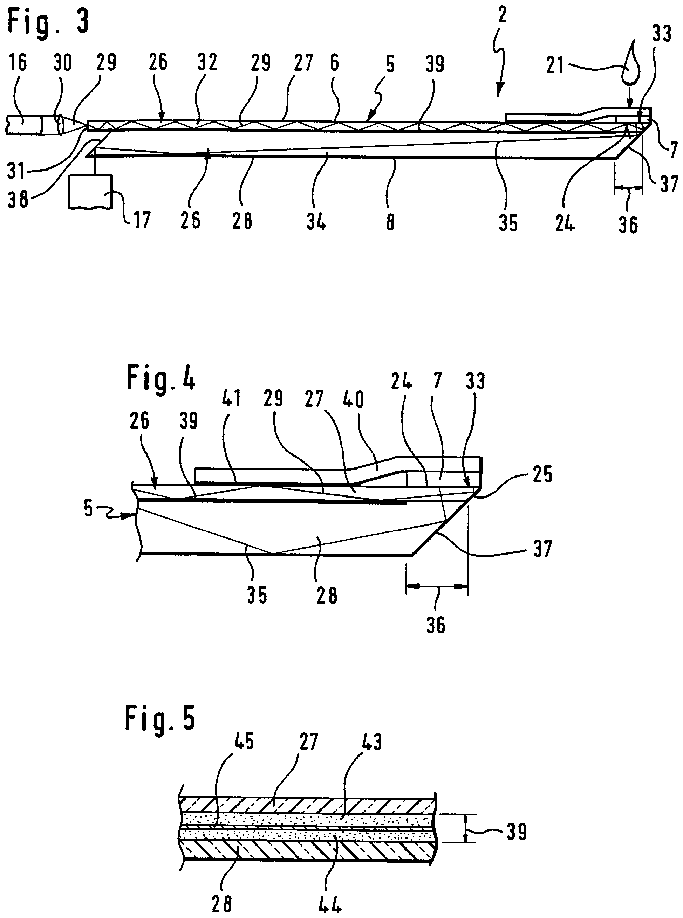

Die Reaktion des in der Probe enthaltenen Analyten mit dem Reagenzsystem führt zu einer optisch meßbaren Änderung, insbesondere einer Farbänderung, der Detektionszone 24. Zur photometrischen Auswertung wird die bei Beleuchtung der Detektionszone 24 mit Primärlicht diffus reflektierte Sekundärlicht-Intensität gemessen. Dies geschieht im Rahmen der Erfindung durch eine spezielle Gestaltung des Testelementes 2 und der damit zusammenwirkenden Teile der optischen Meßeinrichtung 18. Eine bevorzugte Ausführungsform ist in den Figuren 3 und 4 deutlicher zu erkennen.

Die Tragfolie 5 schließt mindestens eine optische Lichtleitschicht 26 mit den erläuterten Eigenschaften hinsichtlich optischer Transparenz und Brechungsindex ein. Nähere Informationen über Lichtleitelemente, deren Lichttransport auf Totalreflexion basiert, können der einschlägigen Literatur entnommen werden. Auf analytischem Gebiet werden Lichtleiter vor allem dort eingesetzt, wo eine Messung an einer schwer zugänglichen Stelle (zum Beispiel im Innern eines Rohres oder innerhalb eines Gefässes im menschlichen Körper) erfolgen soll.

Beispielsweise zeigt die EP 0047094 eine derartige Meßsonde zur Messung unterschiedlicher optischer Eigenschaften von Materie "in situ". Die US-Patentschriften 5,452,716 und Re 33,064 sind Beispiele für einen Typ von analytischen Sensoren, bei dem die Analyse auf der abgeschwächten Totalreflexion (attenuated total reflection, ATR) basiert, die innerhalb eines Lichtleiters beobachtet wird. Die Wechselwirkung zwischen dem Lichtleiter und der umgebenden Probe basiert hier auf dem evanescenten Feld, das einen Lichtleiter umgibt, in dem Totalreflexion stattfindet. In zahlreichen Publikationen wird ein weiterer Typ faseroptischer Sensoren diskutiert, bei dem auf ein Ende einer Lichtleitfaser ein Reagenz aufgebracht ist, Meßlicht innerhalb der Lichtleitfaser an dieses Ende geführt wird und dort eine Änderung infolge der Reaktion des Analyten mit dem Reagenz erfährt (US 5,127,077, US 5,234,835) oder bei dem ein Reagenz in die Lichtleitfaser selbst integriert ist (US 4,846,548). In der DE 19828343 A1 ist ein optischer Sensor für die Analyse von Gasen beschrieben, bei dem mindestens eine transparente gassensitive Schicht in unterschiedlichen Positionen an einem Lichtleiter derartig befestigt ist, daß sie von in dem Lichtleiter transportiertem Licht durchlaufen wird, um die Absorption oder den Brechungsindex in der gassensitiven Schicht zu messen. Obwohl diese vorbekannten Verfahren andere Anwendungsgebiete betreffen und sich auch sonst wesentlich von der vorliegenden Erfindung unterscheiden, können die aus dem Stand der Technik bekannten Informationen über die Lichtleittechnik, beispielsweise geeignete Lichtleit-Materialien, Beschichtungen, die die Totalreflexion fördern und dergleichen auch bei der vorliegenden Erfindung nützlich sein.

Bei der Erfindung weist die Tragfölie 5, wie in den Figuren 3 und 4 dargestellt, zwei Lichtleitschichten 26 auf, wobei die obere Lichtleitschicht als Primärlichtleiter 27 und die untere Lichtleitschicht als Sekundärlichtleiter 28 dient. Das Primärlicht 29 wird von dem Lichtsender 16 mit Hilfe einer Linse 30 in den Primärlichtleiter 27 durch dessen als Eingangsfläche 31 für die Einkopplung dienende hintere Stirnfläche eingekoppelt und innerhalb des Primärlichtleiters 27 bis zu dem Testfeld 7 transportiert. Der Teil des Lichtweges des Primärlichtes 29, der im Innern der Lichtleitschicht 26 verläuft, wird als Lichtleitabschnitt 32 bezeichnet. Der Bereich der oberen Flachseite 6 der Lichtleitschicht 26, der mit dem Testfeld fluchtet, dient zumindest zum Teil als Lichtauskopplungsbereich 33, in dem das Primärlicht 29 aus dem Primärlichtleiter 27 in die Nachweiszone 24 des Testfeldes 7 ausgekoppelt wird.

Bei der dargestellten Ausführungsform wird die Auskopplung des Primärlichts 29 im wesentlichen dadurch bewirkt, daß die dem Auskopplungsbereich 33 (also auch dem Testfeld 7) gegenüberliegende untere Flachseite 8 der Tragfolie 5 (bei der dargestellten zweischichtigen Ausführungsform der Tragfolie die untere Flachseite des Primärlichtleiters 27) derartig ausgebildet ist, daß das Primärlicht in die Detektionszone 24 des Testfeldes 7 umgelenkt wird. Diese Änderung der Lichtausbreitungsrichtung wird durch eine spiegelnde Fläche 25 bewirkt, die vorzugsweise unter einem Winkel von ca. 45° geneigt ist. Sie sollte zur Verbesserung ihrer spiegelnden Eigenschaften poliert und/ oder mit einer metallisch glänzenden Beschichtung versehen sein. Abweichungen von dem Winkel von 45° sind möglich, wobei Winkel zwischen 30° und 60° bevorzugt sind.

Alternativ oder zusätzlich können weitere Maßnahmen ergriffen werden, um die Auskopplung des Primärlichts 29 in dem Auskopplungsbereich 33 zu fördern. Insbesondere sollte das Testfeld 7 - beispielsweise unter Verwendung eines Index-angepaßten Klebstoffes - so befestigt sein, daß in dem Lichtauskopplungsbereich 33 der Brechungsindex in der Umgebung der Tragfolie 5 nicht oder nur unwesentlich niedriger als der Brechungsindex der Lichtleitschicht 26 selbst ist. Jedenfalls sollte er höher sein als außerhalb des Lichtauskopplungsbereichs 33.

In dem gleichen Sinne ist es auch vorteilhaft, wenn das Testfeld derartig befestigt und derartig saugfähig ist, daß flüssige Probenbestandteile in dem Auskopplungsbereich 33 bis zu der Flachseite 6 der Tragfolie transportiert werden und diese in dem Auskopplungsbereich 33 benetzen. Der Brechungsindex einer wässrigen Probenflüssigkeit beträgt etwa n = 1,33. Dieser Wert ist zwar deutlich niedriger als der Brechungsindex des für die Herstellung der Tragfolie 5 bevorzugten Kunststoffmaterials, der zwischen 1,4 und 1,7 liegt. Dennoch wird durch die Benetzung des Auskopplungsbereichs 33 mit der Probenflüssigkeit die Auskopplung des Primärlichts 29 verbessert, weil der Brechungsindex von Wasser deutlich höher als der Brechungsindex von Luft (n = 1) ist. Schließlich wird die Auskopplung im Auskopplungsbereich 33 erleichtert, wenn die Oberfläche der Tragfolie 5 aufgerauht ist.

Um eine möglichst gute Meßgenauigkeit zu erreichen, ist es vorteilhaft, wenn das Testfeld zumindest in der Detektionszone optisch stark streuende Bestandteile enthält. Bevorzugt ist der Streukoeffizient *µ*ₛ größer als der Absorptionskoeffizient *µ*ₐ des Testfeldmaterials. Besonders bevorzugt beträgt *µ*ₛ ein Vielfaches von *µ*ₐ. Beispielsweise kann *µ*ₛ mehr als 10 mal oder sogar mehr als 100 mal so groß wie *µ*ₐ sein. Die diffuse Reflexion des Testfeldmaterials (vor der durch die chemische Reaktion verursachten Farbentwicklung) sollte mindestens etwa 50% betragen.

Das infolge der Beleuchtung mit dem Primärlicht 29 aus der Detektionszone 24 diffus reflektierte Licht fällt als Sekundärlicht 35 in die als Lichtleitelement 26 ausgebildete Tragfolie 5 zurück. Bei der dargestellten zweischichtigen Ausführungsform ist ein von dem Primärlichtleiter 27 optisch weitgehend getrennter Sekundärlichtleiter 28 für den Transport des Lichts im Inneren der Tragfolie 5 zu dem Detektor 17 vorgesehen. Um die gezielte Einkopplung des Sekundärlichts 35 zu fördern, ist es vorteilhaft, wenn der Sekundärlichtleiter 28 wie dargestellt in dem mit der Detektionszone 24 fluchtenden Abschnitt 36 auf der von dem Primärlichtleiter 27 abgewandten Seite wenigstens abschnittsweise derartig abgeschrägt ist, daß von der Detektionszone 24 reflektiertes Licht durch eine spiegelnde Fläche 37 in die zu dem Detektor 17 führende Richtung des Sekundärlichtleiters 28 gespiegelt wird. Die spiegelnde Fläche 37 ist in die gleiche Richtung wie die spiegelnde Fläche 25 geneigt. Der Neigungswinkel der spiegelnden Flächen 25 und 37 zu der Längsachse der Tragfolie 5 liegt vorzugsweise im Winkelbereich um 45° (etwa zwischen 30° und 60°).

Auch wenn die Tragfolie 5 nur eine Lichtleitschicht 26 enthält, ist es vorteilhaft, wenn der mit der Detektionszone 24 fluchtende Abschnitt der Lichtleitschicht 26 auf der von dem Testfeld 7 abgewandten Seite zumindest abschnittsweise (insbesondere durch mindestens eine geneigt zu der Längsachse der Tragfolie 5 verlaufende spiegelnde Fläche) derartig ausgebildet ist, daß die Lichtausbreitungsrichtung des eingestrahlten Primärlichts in Richtung auf die Detektionszone geändert wird und/oder die Lichtausbreitungsrichtung des von der Detektionsfläche diffus reflektierten Sekundärlichts in die zu dem Detektor führende Richtung der Lichtleitschicht gelenkt wird.

Das von der Detektionszone 24 in die Tragfolie 5 reflektierte Sekundärlicht 35 wird auf einem Lichtleitabschnitt 34 seines Lichtweges im Inneren des Sekundärlichtleiters 28 in Richtung zu dem Detektor 17 transportiert. Bei der in Figur 3 dargestellten Ausführungsform ist der Detektor 17 unterhalb (d.h. auf der von dem Primärlichtleiter 27 abgewandten Seite) des Sekundärlichtleiters 28 positioniert. Um das Sekundärlicht 35 aus dem Sekundärlichtleiter 38 in Richtung des Detektors 17 auszukoppeln, ist an dem hinteren (von dem Testfeld 7 entfernten) Ende der Tragfolie 5 wiederum eine schräg zu der Längsachse der Tragfolie verlaufende spiegelnde (polierte und/oder metallisierte) Fläche 38 vorgesehen. Auch diese Fläche ist vorzugsweise im Winkelbereich um 45° (etwa zwischen 30 und 60°) zu der Längsachse der Tragfolie 5 geneigt.

Statt der spiegelnden Flächen 25, 37 und 38 können auch andere Mittel verwendet werden, um die gewünschte Änderung der Lichtausbreitungsrichtung zu bewirken. Insbesondere kann dies durch Brechungsindexvariationen an einer Flachseite der jeweiligen Lichtleitschicht bewirkt werden. Solche Brechungsindexvariationen können beispielsweise durch Bestrahlen mit UV-Laserlicht erzeugt werden.

Im Hinblick auf eine optimale Meßgenauigkeit ist es vorteilhaft, den Primärlichtleiter 27 optisch möglichst vollständig von dem Sekundärlichtleiter 28 zu trennen. Zu diesem Zweck ist bei der dargestellten bevorzugten Ausführungsform zwischen den Lichtleitschichten 27 und 28 mit Ausnahme des mit der Detektionszone 24 des Testfelds 7 fluchtenden Abschnitts 36 eine Lichtsperre 39 vorgesehen. Sie kann aus einer oder mehreren Schichten bestehen.

Vorzugsweise schließt die Lichtsperre 39 eine Sperrschicht ein, deren Brechungsindex kleiner als der Brechungsindex der Lichtleitschichten 27,28 ist. Eine noch vollständigere optische Trennung wird erreicht, wenn sie eine Sperrschicht aus metallisch reflektierendem Material einschließt.

Eine besonders bevorzugte dreischichtige Gestaltung der optischen Sperre 39 ist in Figur 5 dargestellt. Sie besteht aus drei Teilschichten, nämlich einer ersten dem Primärlichtleiter 27 benachbarten Teilschicht 43, einer zweiten dem Sekundärlichtleiter 28 benachbarten Teilschicht 44 und einer metallischen reflektierenden dritten Teilschicht 45, die zwischen der Teilschichten 43 und 44 verläuft. Die Teilschichten 43 und 44 bestehen aus einem Material, dessen Brechungsindex niedriger als der Brechungsindex der benachbarten Lichtleitschichten 27 bzw. 28 ist. Bevorzugt bestehen sie aus einem Klebstoff mit entsprechendem Brechungsindex. Die in Figur 5 dargestellte Gestaltung der optischen Sperre 39 ermöglicht einerseits eine weitgehend verlustfreie Lichtleitung in dem Primärlichtleiter 27 und dem Sekundärlichtleiter 28 und andererseits eine praktisch vollständige optische Trennung.

Wie erwähnt ist die optische Sperre 39 in dem mit der Detektionszone 24 fluchtenden Abschnitt 36 nicht vorhanden. Gemäß einer weiteren Variante kann es vorteilhaft sein, wenn in diesem Bereich keinerlei Trennung zwischen den Schichten 27 und 28 vorhanden ist. Insbesondere kann die Tragfolie 5 in ihrer Längsrichtung bis zu der in Figur 4 linken Grenze des Bereiches 36 unter Bildung getrennter Lichtleitschichten 27 und 28 aufgeschlitzt sein, während sie in dem Bereich 36 über ihre ganze Dicke einstückig ist.

Das Testfeld 7 kann im Rahmen der Erfindung ganz unterschiedlich realisiert sein. Insbesondere können zahlreiche ein- oder mehrschichtige aus dem Stand der Technik bekannte Gestaltungen von Analyseelement-Testfeldern verwendet werden. Wesentlich ist lediglich, daß in der Detektionszone 24 auf der der Tragfolie 5 zugewandten Seite des Testfeldes 7 eine für die Analyse charakteristische optisch meßbare Änderung stattfindet.

Auch weitere Konstruktionsmerkmale bekannter analytischer Testelemente können bei der Erfindung eingesetzt werden. So ist beispielsweise bei dem in den Figuren 2 bis 4 dargestellten Teststreifen 4 über dem Testfeld 7 eine sogenannte Spreitschicht 40 vorhanden, die ihrerseits wiederum mehrschichtig aufgebaut sein kann und Probenvorbereitungsfunktionen erfüllt. Insbesondere kann sie dazu dienen, die gleichmäßige Benetzung der Oberseite des Testfeldes 7 mit der Probenflüssigkeit 21 zu fördern, die roten Blutkörperchen aus Vollblut abzutrennen und Proben-überschüsse abzusaugen. Sofern eine solche Spreitschicht 40 sich - wie in der dargestellten Ausführungsform - sich über den Flächenbereich des Testfeldes 7 hinaus erstreckt und an der Tragfolie 5 befestigt ist, ist es vorteilhaft, auch hier eine optische Sperre 41 aus einem Material mit niedrigem Brechungsindex und/oder metallischer Reflexion vorzusehen und dadurch Störungen der Lichtleiteigenschaften der Tragfolie 5 auszuschließen.

Die Auswertung des Meßsignals, d.h. der gemessenen Intensität des Sekundärlichts und die Ermittlung des gewünschten Analyseresultats, beispielsweise der Glucosekonzentration in der Probe, erfolgt mittels der Meß- und Auswerteelektronik 13 prinzipiell in der gleichen Weise wie bei üblichen Testelement-Analysesystemen und muß deshalb nicht mehr erläutert werden.

Figur 5 zeigt Meßergebnisse, die mit einem Analysesystem, dessen wesentliche Konstruktionsmerkmale den Figuren 2 bis 4 entsprechen, gewonnen wurden. Dargestellt ist die Intensität des Sekundärlichts in willkürlichen Einheiten in Abhängigkeit von der Zeit t in Sekunden. Aufbau und Chemie des Testfeldes 7 entsprachen einem kommerziell erhältlichen Analyseelement-Glucosetest. Dargestellt sind Meßkurven mit jeweils mehreren Messungen für drei unterschiedliche Glucosekonzentrationen, nämlich
Kurve A: 53 mg/dl
Kurve B: 101 mg/dl
Kurve C: 341 mg/dl

Es ist deutlich erkennbar, daß das Meßsignal bei mehreren Messungen sehr gut reproduzierbar ist und die Unterschiede der Meßkurven in Abhängigkeit von der Glucosekonzentration ("Signalhub") eine genaue Auswertung ermöglichen.

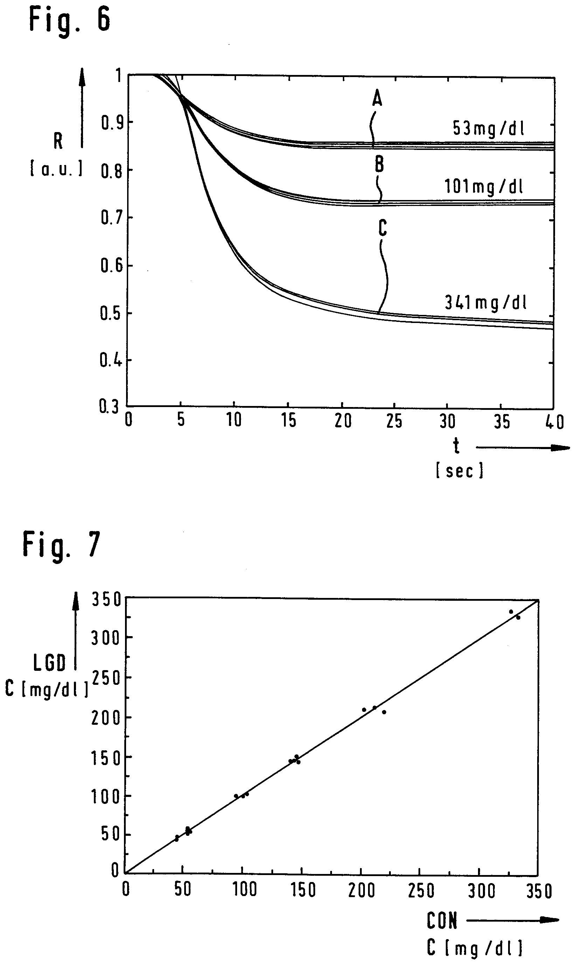

Figur 6 zeigt einen Systemvergleich, bei dem die erfindungsgemäßen Meßwerte der Glucosekonzentration C auf der mit LGD gekennzeichneten Ordinate und die mit einem konventionellen Testelement-Analysesystem gemessenen Meßwerte auf der mit CON (für "conventional") bezeichneten Abszisse aufgetragen sind. Die Ergebnisse zeigen eine praktisch vollständige Übereinstimmung.

## Patentansprüche

1. Teststreifen-Analysesystem zur analytischen Untersuchung einer flüssigen Probe, insbesondere einer Körperflüssigkeit von Menschen oder Tieren, umfassend medizinische Teststreifen (2) mit einer Tragfolie (5) aus Kunststoff und einem an einer Flachseite (6) der Tragfolie (5) befestigten Testfeld (7), das zur Durchführung einer Analyse derartig mit der Probe (21) in Kontakt gebracht wird, daß flüssige Probenbestandteile in das Testfeld (7) eindringen, wobei das Testfeld (7) ein Reagenzsystem enthält, dessen Reaktion mit Bestandteilen der Probe (21) zu einer optisch meßbaren für die Analyse charakteristischen Änderung in einer Detektionszone (24) auf der der Tragfolie (5) zugewandten Seite des Testfeldes (7) führt, und
ein Auswertegerät (3) mit einer Teststreifenhalterung (12) zur Positionierung eines Teststreifens (2) in einer Meßposition und einer Meßeinrichtung (18) zur Messung der optisch meßbaren Änderung in der Detektionszone (24), wobei die Meßeinrichtung (18) einen Lichtsender (16) zur Beleuchtung der Detektionszone (24) mit Primärlicht (29) und einen Detektor (17) zur Detektion des dabei von der Detektionszone (24) diffus reflektierten Sekundärlichtes (35) aufweist,
**dadurch gekennzeichnet, daß**
die Tragfolie (5) des Teststreifens (2) mindestens eine optische Lichtleitschicht (26) aufweist,
die Tragfolie (5) einen Lichtauskopplungsbereich (33) einschließt, der ein Teil der Flachseite der Tragfolie (5), an der das Testfeld (7) befestigt ist, ist und in dem die Detektionszone (24) des Testfelds (7) in einem die Auskopplung von Licht aus der Lichtleitschicht (26) in die Detektionszone (24) ermöglichenden optischen Kontakt zu der Tragfolie (5) steht, das Primärlicht (29) des Lichtsenders (16) derartig durch eine Eingangsfläche (31) in die Lichtleitschicht (26) eingekoppelt werden kann, daß ein Lichtleitabschnitt (32) des Lichtweges des Primärlichts (29) zwischen der Eingangsfläche (31) und der Detektionszone (24) im Innern der Lichtleitschicht (26) verläuft,
und das von der Detektionszone (24) diffus reflektierte Sekundärlicht in die Lichtleitschicht (26) reflektiert wird und ein Lichtleitabschnitt (34) des Lichtweges des Sekundärlichts zwischen der Detektionszone (24) und dem Detektor (17) im Innern der Tragfolie (5) verläuft,
wobei die Tragfolie (5) zwei Lichtleitschichten (26) aufweist, eine erste Lichtleitschicht (27), die als Primärlichtleiter dient, und eine zweite Lichtleitschicht (28), die als Sekundärlichtleiter dient, so dass das Primärlicht in die als Primärlichtleiter (27) dienende erste Lichtleitschicht eingekoppelt werden kann,
und das Sekundärlicht aus der Detektionszone (24) in die zweite als Sekundärlichtleiter (28) dienende Lichtleitschicht eingekoppelt werden kann.

2. Teststreifen-Analysesystem nach Anspruch 1, **dadurch gekennzeichnet, daß** der Teststreifen (2) in der Meßposition derartig positioniert ist, daß sich ein erster Teilabschnitt (22) des Teststreifens innerhalb des Gehäuses (11) des Auswertegerätes (3) befindet und ein zweiter Teilabschnitt (23) aus dem Gehäuse (11) des Auswertegerätes (3) so herausragt, daß er
leicht zugänglich ist, wobei die Eingangsfläche (31) in dem ersten Teilabschnitt (22) und das Testfeld (7) in dem zweiten Teilabschnitt (23) liegt.

3. Medizinischer Teststreifen zur analytischen Untersuchung einer flüssigen Probe, insbesondere einer Körperflüssigkeit von Menschen oder Tieren, mit einer Tragfolie (5) aus Kunststoff und einem an einer Flachseite (6) der Tragfolie (5) befestigten Testfeld (7), das zur Durchführung einer Analyse derartig mit der Probe (21) in Kontakt gebracht wird, daß flüssige Probenbestandteile in das Testfeld (7) eindringen,
wobei das Testfeld (7) ein Reagenzsystem enthält, dessen Reaktion mit Bestandteilen der Probe (21) zu einer optisch meßbaren für die Analyse charakteristischen Änderung in einer Detektionszone (24) führt, die ein Bestandteil des Testfeldes (7) ist und die Detektionszone auf sie auftreffendes Primärlicht diffus reflektiert,
**dadurch gekennzeichnet, daß**
die Tragfolie (5) des Teststreifens (2) mindestens eine optische Lichtleitschicht (26) aufweist,
die Tragfolie (5) einen Lichtauskopplungsbereich (33) einschließt, der ein Teil der Flachseite der Tragfolie (5), an der das Testfeld (7) befestigt ist, ist und in dem die Detektionszone (24) des Testfelds (7) in einem die Auskopplung von Licht aus der Lichtleitschicht (26) in die Detektionszone (24) ermöglichenden optischen Kontakt zu der Tragfolie (5) steht, die Lichtleitschicht (26) eine Eingangsfläche (31) zur Einkopplung von Primärlicht aufweist, so daß ein Lichtleitabschnitt (32) des Lichtweges von in die Lichtleitschicht (26) eingekoppeltem Primärlicht zwischen der Eingangsfläche (31) und der Detektionszone (24) im Innern der Lichtleitschicht (26) verläuft, das von der Detektionszone (24) diffus reflektierte Sekundärlicht in die Lichtleitschicht (26) reflektiert wird und ein Lichtleitabschnitt (34) des Lichtweges des Sekundärlichts zwischen der Detektionszone (24) und dem Detektor (17) im Innern der Tragfolie (5) verläuft,
die Tragfolie (5) zwei Lichtleitschichten (26) aufweist, eine erste Lichtleitschicht (27), die als Primärlichtleiter dient, und eine zweite Lichtleitschicht (28), die als Sekundärlichtleiter dient, so dass das Primärlicht in eine als Primärlichtleiter (27) dienende erste Lichtleitschicht eingekoppelt werden kann, und das Sekundärlicht aus der Detektionszone (24) in die zweite als Sekundärlichtleiter (28) dienende Lichtleitschicht eingekoppelt werden kann.

4. Medizinischer Teststreifen nach Anspruch 3, **dadurch gekennzeichnet, daß** die dem Lichtauskopplungsbereich (33) gegenüberliegende Seite der Lichtleitschicht (26) mindestens abschnittsweise derartig ausgebildet ist, daß die Lichtausbreitungsrichtung des Primärlichts (29) in Richtung auf die Detektionszone (24) geändert wird.

5. Medizinischer Teststreifen nach einem der Ansprüche 3 oder 4, **dadurch gekennzeichnet, daß** die der Detektionszone (24) gegenüberliegende Seite der Lichtleitschicht (26) mindestens abschnittsweise derartig ausgebildet ist, daß die Lichtausbreitungsrichtung des von der Detektionszone diffus reflektierte Sekundärlicht (35) in die zu dem Detektor (17) führende Richtung der Lichtleitschicht (26) geändert wird.

6. Medizinischer Teststreifen nach einem der Ansprüche 3-5, **dadurch gekennzeichnet, daß** das Testfeld (7) derartig saugfähig ist, daß flüssige Probenbestandteile in dem Auskopplungsbereich bis zu der Flachseite (6) der Tragfolie (5), an der das Testfeld (7) befestigt ist, transportiert werden und die Lichtleitschicht (26) in dem Lichtauskopplungsbereich (33) benetzen.

7. Medizinischer Teststreifen nach einem der Ansprüche 3-6, **dadurch gekennzeichnet, daß** die Lichtleitschicht (26) in dem Lichtauskopplungsbereich (33) zur Verbesserung der Auskopplung des Primärlichtes aufgerauht ist.

8. Medizinischer Teststreifen nach einem der Ansprüche 3-7, **dadurch gekennzeichnet, daß** die Detektionszone des Testfeldes (7) optisch stark streuende Bestandteile enthält, wobei vorzugsweise der Streukoeffizient *µ*ₛ mehr als zehnmal so groß wie der Absorptionskoeffizient *µ*ₐ ist.

9. Medizinischer Teststreifen nach Anspruch 3, **dadurch gekennzeichnet, daß** das Testfeld (7) an der von dem Sekundärlichtleiter (28) abgewandten Flachseite (6) des Primärlichtleiters (27) befestigt ist.

10. Medizinischer Teststreifen nach einem der Ansprüche 3 bis 9, **dadurch gekennzeichnet, daß** die Lichtleitschichten (27, 28) wenigstens über einen Teil ihrer Länge durch eine optische Sperre (39) getrennt sind.

11. Medizinischer Teststreifen nach Anspruch 10, **dadurch gekennzeichnet, daß** die optische Sperre drei Teilschichten einschließt, von denen eine erste Teilschicht (43) dem Primärlichtleiter (27) benachbart ist und einen Brechungsindex hat, der kleiner als der Brechungsindex des Primärlichtleiters (27) ist, eine zweite Teilschicht (44) dem Sekundärlichtleiter (28) benachbart ist und einen Brechungsindex hat, der kleiner als der Brechungsindex des Sekundärlichtleiters (28) ist, und eine dritte Teilschicht (45) zwischen der ersten Teilabschnitt (43) und der zweiten Teilschicht (44) verläuft und metallisch reflektiert.

12. Verfahren zur analytischen Untersuchung einer Probe, insbesondere einer Körperflüssigkeit von Menschen oder Tieren, mit einem Teststreifen-Analysesystem nach Anspruch 1, **dadurch gekennzeichnet, daß**
das Primärlicht (29) von dem Lichtsender (16) durch die Eingangsfläche (31) in den Primärlichtleiter (27) eingekoppelt wird,
das eingekoppelte Primärlicht (29) in dem Primärlichtleiter (27) bis zu dem Lichtauskopplungsbereich (33) geleitet und dort so ausgekoppelt wird, daß es mindestens einen Teil der Detektionszone (24) beleuchtet,
dabei in der Detektionszone (24) diffus reflektiertes Sekundärlicht in dem Sekundärlichtleiter (28) in Richtung zu dem Detektor (17) transportiert wird und
das Sekundärlicht aus dem Sekundärlichtleiter (28) in Richtung zu dem Detektor (17) ausgekoppelt wird.

## Claims

1. Test strip analysis system for the analytical examination of a liquid sample, in particular of a body liquid of human beings or of animals, comprising
medical test strips (2) with a carrier film (5) of plastic material and a test field (7) attached to a flat side (6) of the carrier film (5) which test field, in order to perform an analysis, is brought into contact with the sample (21) in such a manner that liquid sample components penetrate into the test field (7), wherein the test field (7) contains a reagent system the reaction of which with components of the sample (21) causes an optically measureable change in a detection zone (24) located on the side of the test field (7) directed towards the carrier film (5), said change being characteristic for the analysis, and
an evaluation instrument (3) with a test strip holder (12) for positioning a test strip (2) in a measuring position, and with a measuring device (18) for measuring the optically measurable change in the detection zone (24), wherein the measuring device (18) comprises a light emitter (16) for irradiating primary light (29) onto the detection zone (24) and a detector (17) for detecting secondary light (35) diffusely reflected from the detection zone (24), the secondary light (35) being caused by the primary light (29),
**characterized in that**
the carrier film (5) of the test strip (2) comprises at least one optical light guide layer (26),
the carrier film (5) comprises a coupling-out zone (33) which is a part of the flat side of the carrier film (5) to which the test field (7) is attached and in which the detection zone (24) of the test field (7) is in optical contact to the carrier film (5) in such a manner that light is coupled out from the light guide layer (26) into the detection zone (24),
the primary light (29) of the light emitter (16) can be coupled into the light guide layer (26) via an entry surface (31) in such a manner that a light guide section (32) of the light path of the primary light (29) between the entry surface (31) and the detection zone (24) runs inside the light guide layer (26),
and the secondary light which is diffusely reflected from the detection zone (24) is reflected into the light guide layer (26) and a light guide section (34) of the light path of the secondary light between the detection zone (24) and the detector (17) runs inside the carrier film (5), wherein the carrier film (5) comprises two light guide layers (26), a first light guide layer (27) serving as primary light guide and a second light guide layer (28) serving as secondary light guide, so that the primary light can be coupled into the first light guide layer serving as primary light guide (27), and the secondary light from the detection zone (24) can be coupled into the second light guide layer serving as secondary light guide (28).

2. Test strip analysis system according to claim 1, **characterized in that** the test strip (2) is positioned in the measuring position in such a manner that a first partial section (22) of the test strip is located inside the housing (11) of the evaluation instrument (3) and a second partial section (23) protrudes from the housing (11) of the evaluation instrument (3) in such a manner that it is easily accessible, wherein the entry surface (31) is located in the first partial section (22) and the test field (7) is located in the second partial section (23).

3. Medical test strip for the analytical examination of a liquid sample, in particular of a body liquid of human beings or animals,
with a carrier film (5) of plastic material and a test field (7) attached to a flat side (6) of the carrier film (5) which test field, in order to perform an analysis, is brought into contact with the sample (21) in such a manner that liquid sample components penetrate into the test field (7),
wherein the test field (7) contains a reagent system the reaction of which with components of the sample (21) causes an optically measurable change in a detection zone (24) which is a part of the test field (7), the change being characteristic for the analysis, and wherein primary light irradiated onto the detection zone is diffusely reflected therefrom
**characterized in that**
the carrier film (5) of the test strip (2) comprises at least one optical light guide layer (26),
the carrier film (5) comprises a coupling-out zone (33) which is a part of the flat side of the carrier film (5) to which the test field (7) is attached and in which the detection zone (24) of the test field (7) is in optical contact to the carrier film (5) in such a manner that light is coupled out from the light guide layer (26) into the detection zone (24),
the light guide layer (26) comprises an entry surface (31) for coupling in primary light in such a manner that a light guide section (32) of the light path of primary light coupled into the light guide layer (26) runs inside the light guide layer (26) between the entry surface (31) and the detection zone (24),
the secondary light which is diffusely reflected from the detection zone (24) is reflected into the light guide layer (26), and a light guide section (34) of the light path of the secondary light runs between the detection zone (24) and the detector (17) inside the carrier film (5),
the carrier film (5) comprises two light guide layers (26), a first light guide layer (27) serving as primary light guide and a second light guide layer (28) serving as secondary light guide, so that the primary light can be coupled into a first light guide layer serving as primary light guide (27), and the secondary light from the detection zone (24) can be coupled into the second light guide layer serving as secondary light guide (28).

4. Medical test strip according to claim 3, **characterized in that** the side of
the light guide layer (26) opposed to the coupling-out zone (33) is adapted, at least in sections thereof, to cause a change of the light propagation direction of the primary light (29) towards the detection zone (24).

5. Medical test strip according to any one of the claims 3 or 4, **characterized in that** the side of the light guide layer (26) which is opposed to the detection zone (24) is adapted, at least in sections thereof, to cause a change of the light propagation direction of the secondary light (35) diffusely reflected from the detection zone, to coincide with the direction of the light guide layer (26) leading towards the detector (17).

6. Medical test strip according to any one of the claims 3 to 5, **characterized in that** the test field (7) is sufficiently absorbent to transport liquid sample components in the coupling-out zone to the flat side (6) of the carrier film (5) to which the test field (7) is attached in such a manner that the liquid sample components wet the light guide layer (26) in the coupling-out zone (33).

7. Medical test strip according to any one of the claims 3 to 6, **characterized in that** the light guide layer (26) in the coupling-out zone (33) is roughened in order to improve the coupling-out of the primary light.

8. Medical test strip according to any one of the claims 3 to 7, **characterized in that** the detection zone of the test field (7) contains components causing strong optical diffusion, wherein the diffusion coefficient µₛ preferably is more than ten times as high as the absorption coefficient µₐ.

9. Medical test strip according to claim 3, **characterized in that** the test field (7) is attached to the flat side (6) of the primary light guide (27) which is opposed to the secondary light guide (28).

10. Medical test strip according to any one of the claims 3 to 9, **characterized in that** the light guide layers (27, 28) are separated, at least over a part of their length, by an optical barrier (39).

11. Medical test strip according to claim 10, **characterized in that** the optical barrier comprises three partial layers, a first partial layer (43) of which is adjacent to the primary light guide (27) and has a refraction index which is lower than the refraction index of the primary light guide (27), a second partial layer (44) is adjacent to the secondary light guide (28) and has a refraction index which is lower than the refraction index of the secondary light guide (28), and a third partial layer (45) runs between the first partial layer (43) and the second partial layer (44) and is metallically reflecting.

12. Method for the analytical examination of a sample, in particular of a body liquid of human beings or animals, with a test strip analysis system according to claim 1, **characterized in that**
the primary light (29) emitted from the light emitter (16) is coupled into the primary light guide (27) through the entry surface (31),
the coupled-in primary light (29) is guided inside the primary light guide (27) to the coupling-out zone (33) where it is coupled out in such a manner that it illuminates at least a part of the detection zone (24),
secondary light generated by diffuse reflection in the detection zone (24) is transported inside the secondary light guide (28) towards the detector (17) and
the secondary light is coupled out from the secondary light guide (28) towards the detector (17).

## Revendications

1. Système d'analyse pour bande de test servant à l'examen analytique d'un échantillon liquide, notamment d'un liquide corporel d'hommes ou d'animaux, comprenant
des bandes de test médical (2) dotées d'une feuille de support (5) en matière plastique et d'une zone de test (7) qui est fixée sur un côté plat (6) de la feuille de support (5) et qui est mise en contact avec l'échantillon (21) pour effectuer une analyse, tel que des composants de l'échantillon liquide pénètrent dans la zone de test (7), ladite zone de test (7) contenant un système réactif, dont la réaction avec des composants de l'échantillon (21) entraîne une modification caractéristique pour l'analyse, optiquement mesurable, dans une zone de détection (24) située sur le côté tourné vers la feuille de support (5) de la zone de test (7), et
un appareil d'évaluation (3) doté d'un support de bande de test (12) pour positionner une bande de test (2) dans une position de mesure et d'un dispositif de mesure (18) pour mesurer la modification optiquement mesurable dans la zone de détection (24), ledit dispositif de mesure (18) présentant un émetteur de lumière (16) pour éclairer la zone de détection (24) avec une lumière primaire (29) et un détecteur (17) pour détecter la lumière secondaire (35) réfléchie de manière diffuse par la zone de détection (24),
**caractérisé en ce que**
la feuille de support (5) de la bande de test (2) présente au moins une couche optique conductrice de lumière (26),
la feuille de support (5) comprend une zone de découplage de lumière (33), qui fait partie du côté plat de la feuille de support (5) sur lequel la zone de test (7) est fixée, et dans laquelle la zone de détection (24) de la zone de test (7) est en contact optique avec la feuille de support (5), permettant de découpler la lumière de la couche conductrice de lumière (26) pour l'injecter dans la zone de détection (24),
la lumière primaire (29) de l'émetteur de lumière (16) peut être injectée dans la couche conductrice de lumière (26) par une face d'entrée (31) de telle sorte qu'un tronçon conducteur de lumière (32) du chemin optique de la lumière primaire (29) s'étend entre la face d'entrée (31) et la zone de détection (24) à l'intérieur de la couche conductrice de lumière (26),
et la lumière secondaire réfléchie de manière diffuse par la zone de détection (24) est réfléchie dans la couche conductrice de lumière (26) et un tronçon conducteur de lumière (34) du chemin optique de la lumière secondaire s'étend entre la zone de détection (24) et le détecteur (17) à l'intérieur de la feuille de support (5),
ladite feuille de support (5) présentant deux couches conductrices de lumière (26), une première couche conductrice de lumière (27) servant de conducteur de lumière primaire et une deuxième couche conductrice de lumière (28) servant de conducteur de lumière secondaire, permettant ainsi d'injecter la lumière primaire dans la première couche conductrice de lumière servant de conducteur de lumière primaire (27) et d'injecter la lumière secondaire de la zone de détection (24) dans la deuxième couche conductrice de lumière servant de conducteur de lumière secondaire (28).

2. Système d'analyse pour bande de test selon la revendication 1,
**caractérisé en ce que** la bande de test (2) est positionnée dans sa position de mesure de telle manière qu'un premier tronçon (22) de la bande de test se trouve à l'intérieur du boîtier (11) de l'appareil d'évaluation (3) et qu'un deuxième tronçon (23) dépasse du boîtier (11) de l'appareil d'évaluation (3) de façon à être facilement accessible, la face d'entrée (31) étant située dans le premier tronçon (22) et la zone de test (7) dans le deuxième tronçon (23).

3. Bande de test médical servant à l'examen analytique d'un échantillon liquide, notamment d'un liquide corporel d'hommes ou d'animaux, dotée d'une feuille de support (5) en matière plastique et d'une zone de test (7) qui est fixée sur un côté plat (6) de la feuille de support (5) et qui est mise en contact avec l'échantillon (21) pour effectuer une analyse, tel que des composants de l'échantillon liquide pénètrent dans la zone de test (7),
ladite zone de test (7) contenant un système réactif, dont la réaction avec des composants de l'échantillon (21) entraîne une modification caractéristique pour l'analyse, optiquement mesurable, dans une zone de détection (24) faisant partie de la zone de test (7), et ladite zone de détection réfléchissant de manière diffuse une lumière primaire incidente sur cette zone,
**caractérisée en ce que**
la feuille de support (5) de la bande de test (2) présente au moins une couche optique conductrice de lumière (26),
la feuille de support (5) comprend une zone de découplage de lumière (33), qui fait partie du côté plat de la feuille de support (5) sur lequel la zone de test (7) est fixée, et dans laquelle la zone de détection (24) de la zone de test (7) est en contact optique avec la feuille de support (5), permettant de découpler la lumière de la couche conductrice de lumière (26) pour l'injecter dans la zone de détection (24),
la couche conductrice de lumière (26) présente une face d'entrée (31) pour injecter la lumière primaire, de telle sorte qu'un tronçon conducteur de lumière (32) du chemin optique de la lumière primaire injectée dans la couche conductrice de lumière (26) s'étend entre la face d'entrée (31) et la zone de détection (24) à l'intérieur de la couche conductrice de lumière (26),
la lumière secondaire réfléchie de manière diffuse par la zone de détection (24) est réfléchie dans la couche conductrice de lumière (26) et un tronçon conducteur de lumière (34) du chemin optique de la lumière secondaire s'étend entre la zone de détection (24) et le détecteur (17) à l'intérieur de la feuille de support (5),
la feuille de support (5) présente deux couches conductrices de lumière (26), une première couche conductrice de lumière (27) servant de conducteur de lumière primaire, et une deuxième couche conductrice de lumière (28) servant de conducteur de lumière secondaire, permettant ainsi d'injecter la lumière primaire dans une première couche conductrice de lumière servant de conducteur de lumière primaire (27) et d'injecter la lumière secondaire de la zone de détection (24) dans la deuxième couche conductrice de lumière servant de conducteur de lumière secondaire (28).

4. Bande de test médical selon la revendication 3, **caractérisée en ce que** le côté faisant face à la zone de découplage de lumière (33) de la couche conductrice de lumière (26) est réalisé au moins par tronçons de façon à modifier la direction de propagation de lumière de la lumière primaire (29) en direction de la zone de détection (24).

5. Bande de test médical selon l'une des revendications 3 ou 4, **caractérisée en ce que** le côté faisant face à la zone de détection (24) de la couche conductrice de lumière (26) est réalisé au moins par tronçons de façon à modifier la direction de propagation de lumière de la lumière secondaire (35), réfléchie de manière diffuse par ladite zone de détection, en direction du détecteur (17) de la couche conductrice de lumière (26).

6. Bande de test médical selon l'une des revendications 3 à 5, **caractérisée en ce que** la zone de test (7) a un tel pouvoir absorbant que des composants de l'échantillon liquide sont transportés dans la zone de découplage jusqu'au côté plat (6) de la feuille de support (5) sur lequel la zone de test (7) est fixée, et viennent humidifier la couche conductrice de lumière (26) dans la zone de découplage de lumière (33).

7. Bande de test médical selon l'une des revendications 3 à 6, **caractérisée en ce que** la couche conductrice de lumière (26) est rugueuse dans la zone de découplage de lumière (33) afin d'améliorer le découplage de la lumière primaire.

8. Bande de test médical selon l'une des revendications 3 à 7, **caractérisée en ce que** la zone de détection de la zone de test (7) contient des composants à haute diffusion optique, le coefficient de diffusion *µ*ₛ étant de préférence plus de dix fois plus grand que le coefficient d'absorption *µ*ₐ.

9. Bande de test médical selon la revendication 3, **caractérisée en ce que** la zone de test (7) est fixée sur le côté plat (6) opposé au conducteur de lumière secondaire (28) du conducteur de lumière primaire (27).

10. Bande de test médical selon l'une des revendications 3 à 9, **caractérisée en ce que** les couches conductrices de lumière (27, 28) sont séparés sur au moins une partie de leur longueur par une barrière optique (39).

11. Bande de test médical selon la revendication 10, **caractérisée en ce que** ladite barrière optique renferme trois couches partielles, dont une première couche partielle (43) est adjacente au conducteur de lumière primaire (27) et possède un indice de réfraction inférieur à celui du conducteur de lumière primaire (27), une deuxième couche partielle (44) est adjacente au conducteur de lumière secondaire (28) et possède un indice de réfraction inférieur à celui du conducteur de lumière secondaire (28), et une troisième couche partielle (45) s'étend entre la première couche partielle (43) et la deuxième couche partielle (44) et est métallique et réfléchissante.

12. Procédé d'examen analytique d'un échantillon, notamment d'un liquide corporel d'hommes ou d'animaux, au moyen d'un système d'analyse pour bande de test selon la revendication 1, **caractérisé en ce que**
l'émetteur de lumière (16) injecte la lumière primaire (29) par la face d'entrée (31) dans le conducteur de lumière primaire (27),
la lumière primaire (29) injectée est conduite dans le conducteur de lumière primaire (27) jusqu'à la zone de découplage de lumière (33) où elle est découplée de façon à éclairer au moins une partie de la zone de détection (24),
la lumière secondaire réfléchie de manière diffuse dans la zone de détection (24) est transportée dans le conducteur de lumière secondaire (28) en direction du détecteur (17) et
la lumière secondaire est découplée du conducteur de lumière secondaire (28) en direction du détecteur (17).
